# EUROPEAN PATENT SPECIFICATION

(11) **EP 1 835 138 B1**
(45) Date of publication and mention of the grant of the patent: **07.03.2012**
(21) Application number: 06700521.5
(22) Date of filing: 04.01.2006
(51) Int. Cl.: F01N 3/20, B01D 53/86, B01D 53/94, F01B 3/08, F01N 3/24, F01N 3/08

(54) **Exhaust gas purifier for internal combustion engine**
Abgasreiniger für einen Verbrennungsmotor
Epurateur de gaz d'échappement pour moteur à combustion interne

(30) Priority: 06.01.2005 JP 2005001582
(43) Date of publication of application: 19.09.2007
(73) Proprietor: TOYOTA JIDOSHA KABUSHIKI KAISHA, Toyota-shi, Aichi-ken, 471-8571 (JP)
(72) Inventor: YOSHIDA, Kohei, Toyota-shi, Aichi, 4718571 (JP); HIROTA, Shinya, Toyota-shi, Aichi, 4718571 (JP); NAKANO, Yasuaki, Toyota-shi, Aichi, 4718571 (JP)
(74) Representative: TBK
(86) International application number: PCT/JP2006/300157
(87) International publication number: WO 2006/073199

(56) References cited:
- JP-A- 06 229 232
- JP-A- 06 336 914
- JP-A- 11 280 456
- JP-A- 2000 018 022
- JP-A- 2005 133 610

## Description

### TECHNICAL FIELD

The present invention relates to an exhaust purification apparatus of an internal combustion engine.

### BACKGROUND ART

There is known an exhaust purification apparatus comprising a catalyst for reducing the nitrogen oxides (NOx) exhausted from combustion chambers of the internal combustion engine for purification (hereinafter referred to as an "NOx catalyst") in an exhaust passage of an internal combustion engine. Further, it is known that such an NOx catalyst can trap sulfur oxides (SOx). Therefore, use of such an NOx catalyst as a trapping material for trapping SOx in exhaust gas (hereinafter referred to as "SOx trapping material") is also known.

However, when utilizing NOx catalyst as an SOx trapping material, there is a limit to the amount of SOx which the SOx trapping material can trap. If the amount of SOx trapped in the SOx trapping material ends up exceeding that limit value, the SOx trapping material ends up being unable to trap SOx any longer.

Therefore, for example, in Japanese Patent Publication (A) No. 2005-133610, when the amount of SOx trapped by the SOx trapping material exceeds a predetermined amount, SOx is made to diffuse in the SOx trapping material so that the SOx trapping material can newly trap SOx, that is, the SOx trapping ability of the SOx trapping material is restored, by maintaining the inside atmosphere of the SOx trapping material at a lean atmosphere and making the temperature of the SOx trapping material a high temperature.

However, as explained above, when diffusing SOx in the SOx trapping material to restore the SOx trapping ability of the SOx trapping material, simultaneously with that, the NOx trapped in the SOx trapping material ends up being exhausted from the SOx trapping material. The NOx exhausted from the SOx trapping material in this way should be treated by some sort of method before ending up being exhausted into the atmosphere.

Therefore, an object of the present invention is to treat the NOx exhausted from an SOx trapping material well when restoring the SOx trapping ability of the SOx trapping material.

### DISCLOSURE OF THE INVENTION

To solve this problem, in a first aspect of the invention, an exhaust purification apparatus according to claim 1 is provided.

In a second aspect of the invention, as in the first aspect of the invention, the apparatus is further provided with a reducing agent feeding means for feeding reducing agent into the engine exhaust passage downstream of the SOx trapping material and upstream of the NOx catalyst and the NOx trapping ability of the NOx catalyst is restored by feeding reducing agent by the reducing agent feeding means into the engine exhaust passage.

In a third aspect of the invention, as in the second aspect of the invention, when restoring the SOx trapping ability of the SOx trapping material, the reducing agent feeding means feeds reducing agent into the engine exhaust passage.

In a fourth aspect of the invention, as in the second aspect of the invention, when restoring the SOx trapping ability of the SOx trapping material, the reducing agent feeding means feeds reducing agent into the engine exhaust passage when the temperature of the SOx trapping material is in the process of rising.

In a fifth aspect of the invention, as in the second aspect of the invention, when restoring the SOx trapping ability of the SOx trapping material, the reducing agent feeding means feeds reducing agent in the engine exhaust passage from when the temperature of the SOx trapping material reaches the temperature at which heat decomposition of the nitrates occurs in the SOx trapping material to when the SOx trapping material no longer discharges NOx due to heat decomposition.

In a sixth aspect of the invention, as in any one of the third to fifth aspects of the invention, the reducing agent feeding means feeds reducing agent at predetermined time intervals when restoring the SOx trapping ability of the SOx trapping material.

In a seventh aspect of the invention, as in any one of the first to sixth aspects of the invention, the temperature of the SOx trapping material is raised in stages when raising the temperature of the SOx trapping material for restoring the SOx trapping ability of the SOx trapping material.

According to the first aspect of the invention, when starting control for restoring the SOx trapping ability of the SOx trapping material, the NOx trapping ability of the NOx catalyst is restored at least to a certain extent, so when restoring the SOx trapping ability of the SOx trapping material, the NOx exhausted from the SOx trapping material can be sufficiently trapped at the NOx catalyst.

According to the third to fifth aspects of the invention, when restoring the SOx trapping ability of the SOx trapping material, the NOx exhausted from the SOx trapping material and flowing into the NOx catalyst is reduced for purification in the NOx catalyst.

According to the seventh aspect of the invention, when restoring the SOx trapping ability of the SOx trapping material, a large amount of NOx exhausted all at once from the SOx trapping material is avoided, so at this time, the NOx catalyst can sufficiently trap or reduce the NOx for purification.

### BRIEF DESCRIPTION OF THE DRAWINGS

FIG. 1 is a view showing an entire internal combustion engine provided with an exhaust purification apparatus of the present invention.
FIG. 2 is a view showing a time chart of one example of SOx trapping ability restoration processing in accordance with one embodiment of the present invention.
FIG. 3 is a view showing a time chart of one example of SOx trapping ability restoration processing in accordance with another embodiment of the present invention.
FIG. 4 is a view showing a time chart of one example of SOx trapping ability restoration processing in accordance with still another embodiment of the present invention.

### BEST MODE FOR CARRYING OUT THE INVENTION

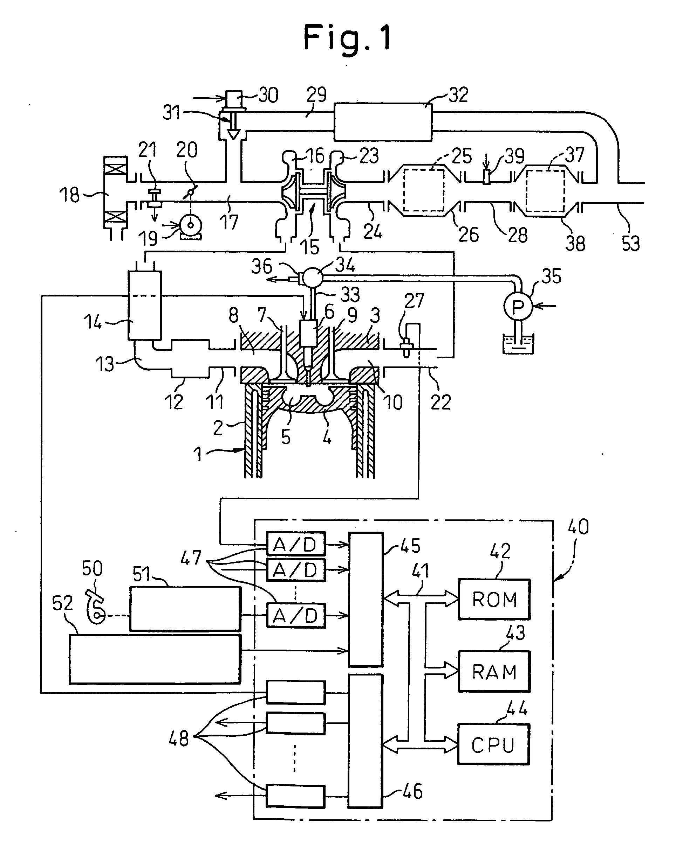

Below, the present invention will be explained with reference to the drawings. FIG. 1 is a view showing an overall internal combustion engine provided with an exhaust purification apparatus of a first embodiment of the present invention. The internal combustion engine shown in FIG. 1 is a four-stroke compression ignition type internal combustion engine. In FIG. 1, 1 indicates an engine body, 2 indicates a cylinder block, 3 indicates a cylinder head, 4 indicates a piston, 5 indicates a combustion chamber, 6 indicates an electrically control type fuel injector, 7 indicates a suction valve, 8 indicates an intake port, 9 indicates an exhaust valve, and 10 indicates an exhaust port.

The intake port 8 is connected through a corresponding intake tube 11 to a surge tank 12. The surge tank 12 is connected through an intake duct 13 and intercooler 14 to a supercharger, for example, the outlet of a compressor 16 of an exhaust turbocharger 15. The inlet of the compressor 16 is connected through an intake pipe 17 to an air cleaner 18. Inside the intake pipe 17 is disposed a throttle valve 20 driven by a step motor 19. Further, inside the intake pipe 17 upstream of the throttle valve 20 is disposed a mass flow detector 21 for detecting the mass flow of air taken into a combustion chamber 5 (the mass flow of intake air).

On the other hand, the exhaust port 10 is connected through an exhaust manifold 22 to an inlet of the exhaust turbine 23 of the exhaust turbocharger 15. The outlet of the exhaust turbine 23 is connected through an exhaust pipe 24 to a casing 26 housing an SOx trapping material 25. Further, the casing 26 housing the SOx trapping material 25 is connected through an exhaust pipe 28 to a casing 38 housing an NOx catalyst 37. Further, the exhaust pipe 28 downstream of the SOx trapping material 25 and upstream of the NOx catalyst 37 has a reducing agent feeder 39 attached to it for feeding a reducing agent (for example, hydrocarbons) into the exhaust pipe. Note that the exhaust manifold 22 has an air-fuel ratio sensor 27 attached to it.

The exhaust pipe 53 connected to the outlet of the casing 38 and the intake pipe 17 downstream of the throttle valve 20 are connected with each other through an exhaust gas recirculation (below, "EGR") passage 29. In the EGR passage 29 is disposed an EGR control valve 31 driven by a step motor 30. Further, in the EGR passage 29 is disposed an EGR cooler 32 for cooling the EGR gas flowing through the passage. In the embodiment shown in FIG. 1, the engine cooling water is led into the EGR cooler 32 where the EGR gas is cooled by the engine cooling water.

On the other hand, the fuel injector 6 is connected through a fuel feed tube 33 to a fuel reservoir, that is, a so-called "common rail 34". The fuel from an electrically control type variable discharge fuel pump 35 is fed to the common rail 34. The fuel fed into the common rail 34 is fed through individual fuel feed tubes 33 to the corresponding fuel injectors 6. The common rail 34 has a fuel pressure sensor 36 attached to it to detect the fuel pressure inside it. Based on the output signal of this fuel pressure sensor 36, the discharge of the fuel pump 35 is controlled so that the fuel pressure in the common rail 34 becomes the target fuel pressure.

The electronic control unit 40 is comprised of a digital computer and is provided with a ROM (read only memory) 42, RAM (random access memory) 43, CPU (microprocessor) 44, input port 45, and output port 46 connected with each other by a bi-directional bus 41. The output signals of the mass flow detector 21, air-fuel ratio sensor 27, and fuel pressure sensor 36 are input through corresponding AD converters 47 to the input port 45.

A load sensor 51 for generating an output pulse proportional to the amount of depression is connected to the accelerator pedal 50. The output voltage of the load sensor 51 is input through a corresponding AD converter 47 to the input port 45. Further, a crank angle sensor 52 generating an output pulse each time the crankshaft rotates by for example 30° is connected to the input port 45. On the other hand, the output port 46 is connected through a corresponding drive circuit 48 to the fuel injector 6, throttle valve control step motor 19, EGR control valve control step motor 30, fuel pump 35, and reducing agent feeder 39. The operations of these are controlled by the electronic control unit 40.

Next, the SOx trapping material 25 will be explained. The SOx trapping material 25 traps SOx in the exhaust gas when the air-fuel ratio of the exhaust gas flowing into it is leaner than the stoichiometric air-fuel ratio and the temperature of the SOx trapping material 25 is lower than a certain temperature. Therefore, the SOx trapping ability of the SOx trapping material 25 (that is, the amount of SOx which the SOx trapping material 25 can newly trap) continues to fall while the air-fuel ratio of the exhaust gas flowing into it is leaner than the stoichiometric air-fuel ratio and the temperature of the SOx trapping material 25 is lower than a certain temperature.

However, when the air-fuel ratio of the exhaust gas flowing into the SOx trapping material 25 is leaner than the stoichiometric air-fuel ratio and the temperature of the SOx trapping material 25 becomes higher than the certain temperature, the SOx trapped and held at the SOx trapping material 25 diffuses inside the-SOx holding material and the SOx trapping ability of the SOx trapping material 25 rises.

On the other hand, the SOx trapping material 25 releases the trapped and held SOx when the air-fuel ratio of the inflowing exhaust gas becomes richer than the stoichiometric air-fuel ratio and the temperature of the SOx trapping material 25 becomes higher than a certain temperature. Therefore, at this time as well, the SOx trapping ability of the SOx trapping material 25 rises.

This SOx trapping material is described for example in Japanese Patent Publication (A) No. 2005-133610 (in that publication, referred to as an "SOx trap catalyst").

Note that the temperature for making the SOx diffuse in the SOx trapping material 25 when the air-fuel ratio of the inflowing exhaust gas is leaner than the stoichiometric air-fuel ratio is higher than the temperature for making the SOx be released from the SOx trapping material 25 when the air-fuel ratio of the inflowing exhaust gas is richer than the stoichiometric air-fuel ratio.

Next, the NOx catalyst 37 will be explained. The NOx catalyst 37 absorbs or stores the NOx in the exhaust gas to trap it when the air-fuel ratio of the exhaust gas flowing into it is leaner than the stoichiometric air-fuel ratio. Therefore, the NOx trapping ability of the NOx catalyst 37 (that is, the amount of NOx which the NOx catalyst 37 can newly trap) continues to fall while the air-fuel ratio of the inflowing exhaust gas is leaner than the stoichiometric air-fuel ratio.

However, if the air-fuel ratio of the exhaust gas flowing into the NOx catalyst 37 becomes richer than the stoichiometric air-fuel ratio, the NOx catalyst 37 releases the trapped and held NOx and reduces it for purification by the substances having a reducing ability contained in the exhaust gas. Due to this, the NOx trapping ability of the NOx catalyst 37 rises.

This NOx catalyst is for example described in Japanese Patent Publication (A) No. 2005-133610 (in that publication, referred to as the "NOx storage catalyst").

In the internal combustion engine of the present embodiment, usually the combustion is performed in the state where the air-fuel ratio is leaner than the stoichiometric air-fuel ratio, so usually the air-fuel ratio of the exhaust gas exhausted from it becomes leaner than the stoichiometric air-fuel ratio. Therefore, according to the present embodiment, usually the SOx in the exhaust gas is trapped by the SOx trapping material 25, and the NOx in the exhaust gas is trapped by the NOx catalyst 37.

However, there is a limit to the amount of SOx which the SOx trapping material 25 can trap to the maximum extent. Therefore, to trap the SOx in the exhaust gas by the SOx trapping material 25 well, it is necessary to raise the SOx trapping ability of the SOx trapping material 25 before the amount of SOx trapped at the SOx trapping material 25 (hereinafter referred to as "the trapped amount of SOx") exceeds that limit value. Therefore, in the present embodiment, before the trapped amount of SOx exceeds that limit value, the temperature of the SOx trapping material 25 is raised to the SOx diffusion temperature (that is, the temperature at which SOx can be diffused inside the SOx trapping material 25). Due to this, the SOx trapped at the SOx trapping material 25 diffuses in the SOx trapping material 25 and the SOx trapping ability of the SOx trapping material 25 rises (is restored).

Note that as the method for raising the temperature of the SOx trapping material 25, for example, there are the method of attaching a heater to the SOx trapping material 25 and using this heater to raise the temperature of the SOx trapping material 25, the method of changing the operating state of the internal combustion engine so as to raise the temperature of the exhaust gas exhausted from the combustion chambers and make this exhaust gas flow into the SOx trapping material 25 to raise the temperature of the SOx trapping material 25, etc.

However, the SOx trapping material 25 of the present embodiment traps not only trap SOx, but also quite a bit of NOx. Further, when restoring the SOx trapping ability of the SOx trapping material 25 in the above way, that is, when the temperature of the SOx trapping material 25 is raised (in particular, when the temperature of the SOx trapping material 25 is in the process of rising), the NOx which had been trapped in the SOx trapping material 25 is released due to heat decomposition from the SOx trapping material 25 all at once. Here, when the NOx trapping ability of the NOx catalyst 37 is low, the NOx released from the SOx trapping material 25 passes through the NOx catalyst 37 as well and ends up flowing out downstream of the NOx catalyst 37.

Therefore, in this embodiment, before the processing for restoring the SOx trapping ability of the SOx trapping material 25 (hereinafter referred to as the "SOx trapping ability restoration processing") as explained above, control for restoring (raising) the NOx trapping ability of the NOx catalyst 37 is started, then the SOx trapping ability restoration processing is started.

That is, in more detail, the reducing agent feeder 39 positioned downstream of the SOx trapping material 25 and upstream of the NOx catalyst 37 injects reducing agent to make the air-fuel ratio of the exhaust gas flowing into the NOx catalyst 37 richer than the stoichiometric air-fuel ratio. According to this, the NOx trapped and held at the NOx catalyst 37 is released from the NOx catalyst 37 and reduced for purification by the reducing agent in the exhaust gas. Therefore, the NOx trapping ability of the NOx catalyst 37 is restored.

Further, after starting the control for restoring the NOx trapping ability of the NOx catalyst 37 in this way, the SOx trapping ability restoration processing is started. According to this, the NOx released from the SOx trapping material 25 during the SOx trapping ability restoration processing is trapped well by the NOx catalyst 37.

Note that in the processing for restoring the NOx trapping ability of the NOx catalyst 37 performed before the SOx trapping ability restoration processing, the extent of restoration of the NOx trapping ability of the NOx catalyst 37 may be any value, but the maximum is preferred. That is, it is preferable to make all (or almost all) of the NOx trapped and held at the NOx catalyst 37 be released from the NOx catalyst 37 and reduced for purification.

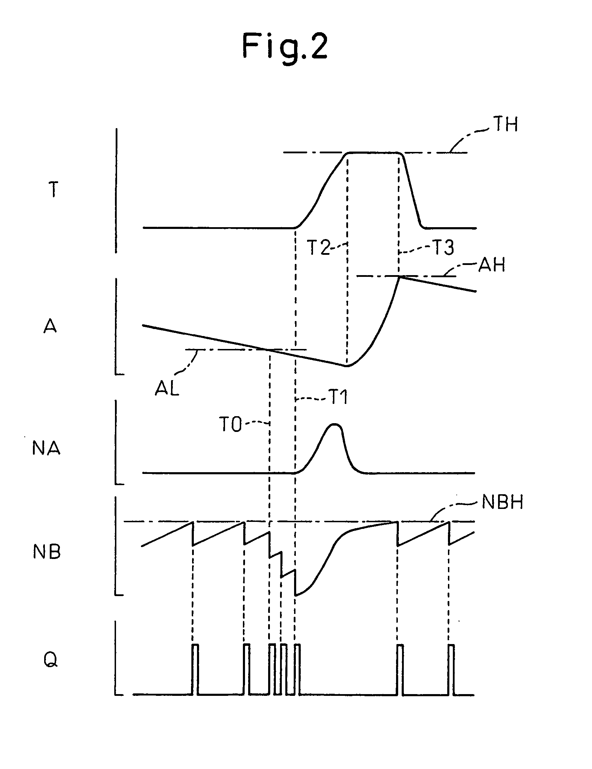

Next, an example of the SOx trapping ability restoration processing in accordance with the above mentioned embodiment will be explained with reference to the time chart of FIG. 2. In FIG. 2, in order from the top, T indicates the temperature of the SOx trapping material 25, A indicates the SOx trapping ability of the SOx trapping material 25, NA shows the amount of NOx flowing out from the SOx trapping material 25, NB shows the amount of NOx held at the NOx catalyst 37, and Q shows the amount of reducing agent injected from the reducing agent feeder 39.

Further, in FIG. 2, TH indicates the temperature of the SOx trapping material necessary for restoring the SOx trapping ability, that is, shows the temperature of the SOx trapping material targeted in the SOx trapping ability restoration processing. Further, AL shows any set allowable lower limit of the SOx trapping ability, that is, the judgment value for judging whether the SOx trapping ability restoration processing should be performed. Further, AH shows the judgment value for judging whether the SOx trapping ability restoration processing may be ended. Further, NBH shows any set limit value of the amount of NOx trapped and held at the NOx catalyst, that is, the judgment value for judging whether the processing for restoring the NOx trapping ability of the NOx catalyst should be performed.

In the time chart shown in FIG. 2, at the time T0, the SOx trapping ability A falls below the threshold value AL, so at this time, it is judged that the SOx trapping ability restoration processing should be performed. This being the case, the reducing agent feeder 39 injects reducing agent and reduces the NOx held at the NOx catalyst 37 for purification. Further, the reducing agent feeder 39 injects reducing agent several times (in the illustrated example, three times) until the amount NB of the NOx held at the NOx catalyst 37 reaches zero. That is, here, the processing for restoring the NOx trapping ability of the NOx catalyst 37 (hereinafter also referred to as "NOx trapping ability restoration processing") is performed.

At the time T1 when the amount NB of the NOx held at the NOx catalyst 37 reaches zero, the SOx trapping ability restoration processing is started, whereby the temperature T of the SOx trapping material 25 starts to rise. At this time, the NOx held at the SOx trapping material 25 starts to flow out from the SOx trapping material 25 due to heat decomposition, so the amount of NOx held at the NOx catalyst 37 rises.

Further, at the time T2 when the temperature T of the SOx trapping material 25 reaches the SOx diffusion temperature TH, the SOx trapping ability A starts to rise. Further, at the time T3 where the SOx trapping ability A reaches the threshold value AH, it is judged that the SOx trapping ability A has already been restored to a sufficient value, and the temperature of the SOx trapping material 25 is reduced, whereby the SOx trapping ability restoration processing is ended. In this way, the SOx trapping ability restoration processing is performed according to the present embodiment.

Note that in the illustrated example, each time the amount NB of NOx held by the NOx catalyst 37 reaches a certain value NBH, the reducing agent feeder 39 injects reducing agent and the NOx held at the NOx catalyst 37 is reduced for purification.

However, according to this embodiment, when SOx trapping ability restoration processing is started, the NOx trapping ability of the NOx catalyst 37 is restored to at least a certain extent, so the NOx released from the SOx trapping material 25 should be trapped well by the NOx catalyst 37. However, during SOx trapping ability restoration processing (in particular when the temperature of the SOx trapping material 25 is in the process of rising), not only the NOx newly exhausted from the combustion chamber, but also the NOx released from the SOx trapping material 25 flows into the NOx catalyst 37, so the amount of NOx flowing into the NOx catalyst 37 per unit time during SOx trapping ability restoration processing is greater than the amount of NOx flowing into the NOx catalyst 37 per unit time when SOx trapping ability restoration processing is not performed. Therefore, in some cases, during SOx trapping ability restoration processing, there is a possibility that the amount of NOx trapped in the NOx catalyst 37 will reach the limit value and NOx will end up flowing out downstream of the NOx catalyst 37.

Therefore, in the above mentioned embodiment, during SOx trapping ability restoration processing (in particular when the temperature of the SOx trapping material 25 is in the process of rising or in the period from when the temperature of the SOx trapping material 25 reaches the temperature at which heat decomposition of the nitrates occurs in the SOx trapping material 25 to when NOx is no longer released from the SOx trapping material 25 due to heat decomposition), the reducing agent feeder 39 may inject reducing agent to maintain the air-fuel ratio of the exhaust gas flowing into the NOx catalyst 37 at the stoichiometric air-fuel ratio or intermittently make the air-fuel ratio of the exhaust gas flowing into the NOx catalyst 37 richer than the stoichiometric air-fuel ratio. According to this, during SOx trapping ability restoration processing, the NOx flowing into the NOx catalyst 37 is successively reduced for purification by the reducing agent, so NOx flowing out downstream of the NOx catalyst 37 is avoided.

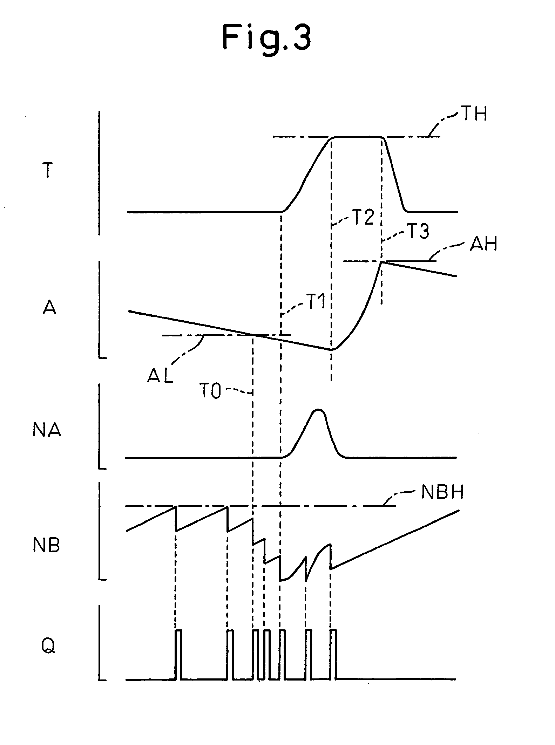

An example of the SOx trapping ability restoration processing in accordance with this embodiment will be explained with reference to the time chart of FIG. 3. Note that FIG. 3 is a view similar to FIG. 2.

In the time chart shown in FIG. 3 as well, at the time T0, the SOx trapping ability A falls below the threshold value AL, so the NOx trapping ability restoration processing is started. Further, this NOx trapping ability restoration processing is performed until the amount NB of the NOx held in the NOx catalyst 37 becomes zero.

At the time T1 when the amount NB of the NOx held at the NOx catalyst 37 reaches zero, the SOx trapping ability restoration processing is started. Here, in this embodiment, while the temperature of the SOx trapping material is rising, the reducing agent feeder 39 feeds reducing agent at predetermined time intervals. Due to this, during SOx trapping ability restoration processing, the NOx flowing into the NOx catalyst 37 is reduced for purification by the reducing agent at the NOx catalyst 37.

Further, at the time T2 when the temperature T of the SOx trapping material 25 reaches the SOx diffusion temperature TH, the SOx trapping ability A starts to rise. Further, at the time T3 when the SOx trapping ability A rises to the threshold value AH, the SOx trapping ability restoration processing is ended.

However, as explained above, the amount of NOx flowing into the NOx catalyst 37 per unit time during SOx trapping ability restoration processing is larger than the amount of NOx flowing into the NOx catalyst 37 per unit time when SOx trapping ability restoration processing is not performed. For this reason, even if starting the control for restoring the NOx trapping ability of the NOx catalyst 37 before the SOx trapping ability restoration processing, not all of the inflowing NOx can necessarily be trapped or reduced for purification by the NOx catalyst 37.

Therefore, in the above mentioned embodiment, when performing the SOx trapping ability restoration processing, the temperature of the SOx trapping material 25 may also be raised in stages. In general, the higher the temperature of the SOx trapping material 25, the easier it is for the NOx to be released from the SOx trapping material 25. Therefore, if raising the temperature of the SOx trapping material 25 in stages, since the NOx is released successively from the SOx trapping material 25 from the easily releasable NOx, it is possible to keep the amount of NOx flowing into the NOx catalyst 37 per unit time to below a certain amount during the SOx trapping ability restoration processing. Due to this, it is possible to reliably trap or reduce for purification the NOx flowing into the NOx catalyst 37 by the NOx catalyst 37 during SOx trapping ability restoration processing.

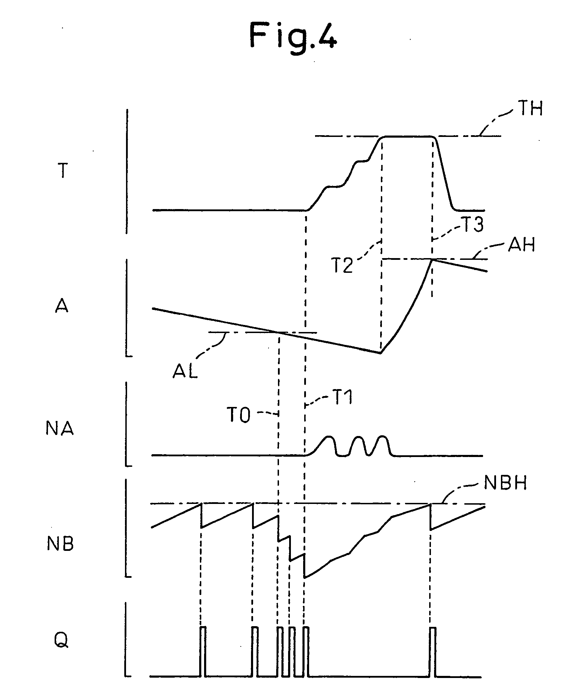

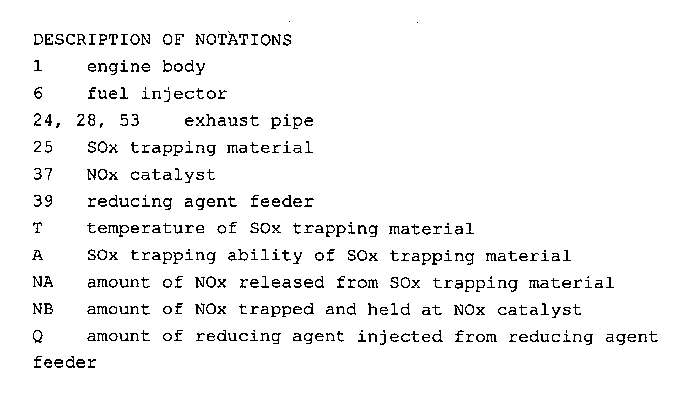

An example of the SOx trapping ability restoration processing according to this embodiment will be explained with reference to the time chart of FIG. 4. Note that FIG. 4 is a view similar to FIG. 2.

In the time chart shown in FIG. 4 as well, at the time T0, the SOx trapping ability A falls below the threshold value AL, so the NOx trapping ability restoration processing is started. Further, this NOx trapping ability restoration processing is performed until the amount NB of the NOx held at the NOx catalyst 37 becomes zero.

At the time T1 when the amount NB of the NOx held at the NOx catalyst 37 reaches zero, the SOx trapping ability restoration processing is started. Here, in this embodiment, the temperature of the SOx trapping material 25 is raised in stages. Further, the SOx trapping ability A starts to rise from the time T2 when the temperature T of the SOx trapping material 25 reaches the SOx diffusion temperature TH. Further, the SOx trapping ability restoration processing is ended at the time T3 when the SOx trapping ability A rises to the threshold value AH.

Note that in the above mentioned embodiment, when performing the SOx trapping ability restoration processing, it is also possible to raise the temperature of the SOx trapping material 25 in stages and inject the reducing agent from the reducing agent feeder 39 during the SOx trapping ability restoration processing (in particular, when the temperature of the SOx trapping material 25 is in the process of rising or until NOx is no longer released from the SOx trapping material 25 due to heat decomposition) to maintain the air-fuel ratio of the exhaust gas flowing into the NOx catalyst 37 at the stoichiometric air-fuel ratio, or intermittently make the air-fuel ratio of the exhaust gas flowing into the NOx catalyst 37 richer than the stoichiometric air-fuel ratio.

## Claims

1. An exhaust purification apparatus of an internal combustion engine comprising, in an engine exhaust passage, an SOx trapping material (25) for trapping SOx in exhaust gas which traps SOx when the inside atmosphere of said SOx trapping material (25) is a lean atmosphere and the temperature of said SOx trapping material (25) is relatively low and which is restored in SOx trapping ability when the inside atmosphere of said SOx trapping material (25) is maintained at the lean atmosphere and the temperature of said SOx trapping material (25) becomes relatively high whereby the SOx trapped and held at the SOx trapping material diffuse inside the SOx holding material, which exhaust purification apparatus is provided with an NOx catalyst (37) arranged downstream of said SOx trapping material trapping and holding the NOx when the inside atmosphere is a lean atmosphere and reducing the held NOx for purification when the inside atmosphere becomes a rich atmosphere in the engine exhaust passage downstream of said SOx trapping material (25) and starts control for restoring the NOx trapping ability of the NOx catalyst (37) before starting control for restoring the SOx trapping ability of the SOx trapping material (25) when trying to restore the SOx trapping ability of the SOx trapping material (25).

2. An exhaust purification apparatus as set forth in claim 1, wherein the apparatus is further provided with a reducing agent feeding means for feeding reducing agent into the engine exhaust passage downstream of said SOx trapping material and upstream of said NOx catalyst and the NOx trapping ability of the NOx catalyst is restored by feeding reducing agent by said reducing agent feeding means into the engine exhaust passage.

3. An exhaust purification apparatus as set forth in claim 2, wherein when restoring the SOx trapping ability of the SOx trapping material, said reducing agent feeding means feeds reducing agent into the engine exhaust passage.

4. An exhaust purification apparatus as set forth in claim 2, wherein when restoring the SOx trapping ability of the SOx trapping material, said reducing agent feeding means feeds reducing agent into the engine exhaust passage when the temperature of said SOx trapping material is in the process of rising.

5. An exhaust purification apparatus as set forth in claim 2, wherein when restoring the SOx trapping ability of the SOx trapping material, said reducing agent feeding means feeds reducing agent in the engine exhaust passage from when the temperature of the SOx trapping material reaches the temperature at which heat decomposition of the nitrates occurs in said SOx trapping material to when the SOx trapping material no longer discharges NOx due to heat decomposition.

6. An exhaust purification apparatus as set forth in any one of claims 3 to 5, wherein said reducing agent feeding means feeds reducing agent at predetermined time intervals when restoring the SOx trapping ability of the SOx trapping material.

7. An exhaust purification apparatus as set forth in any one of claims 1 to 6, wherein the temperature of said SOx trapping material is raised in stages when raising the temperature of said SOx trapping material for restoring the SOx trapping ability of the SOx trapping material.

## Patentansprüche

1. Abgasreinigungsgerät einer Brennkraftmaschine mit, in einem Maschinenabgasdurchgang, einem SOx-Fangmaterial (25) zum Fangen von SOx in einem Abgas, das SOx fängt, wenn die innere Atmosphäre des SOx-Fangmaterials (25) eine magere Atmosphäre ist und die Temperatur des SOx-Fangmaterials (25) relativ niedrig ist, und dessen SOx-Fangvermögen wiederhergestellt wird, wenn die innere Atmosphäre des SOx-Fangmaterials (25) bei der mageren Atmosphäre aufrechterhalten wird und die Temperatur des SOx-Fangmaterials (25) relativ hoch wird, wodurch das SOx, das an dem SOx-Fangmaterial gefangen und gehalten ist, ins Innere des SOx-Haltematerials diffundiert, wobei das Abgasreinigungsgerät mit einem NOx-Katalysator (37) versehen ist, der stromabwärts des SOx-Fangmaterials angeordnet ist und der das NOx fängt und hält, wenn die innere Atmosphäre eine magere Atmosphäre ist, und das gehaltene NOx zur Reinigung reduziert, wenn die innere Atmosphäre eine fette Atmosphäre in dem Maschinenabgasdurchgang stromabwärts des SOx-Fangmaterials (25) wird, und eine Steuerung zum Wiederherstellen des NOx-Fangvermögens des NOx-Katalysators (37) vor einem Beginnen einer Steuerung zum Wiederherstellen des SOx-Fangvermögens des SOx-Fangmaterials (25) beginnt, wenn versucht wird, das SOx-Fangvermögen des SOx-Fangmaterials (25) wiederherzustellen.

2. Abgasreinigungsgerät nach Anspruch 1, wobei das Gerät des Weiteren mit einer Reduktionsmittelfördereinrichtung zum Fördern eines Reduktionsmittels in den Maschinenabgasdurchgang stromabwärts des SOx-Fangmaterials und stromaufwärts des NOx-Katalysators versehen ist, und das NOx-Fangvermögen des NOx-Katalysators durch Fördern eines Reduktionsmittels durch die Reduktionsmittelfördereinrichtung in den Maschinenabgasdurchgang wiederhergestellt wird.

3. Abgasreinigungsgerät nach Anspruch 2, wobei, wenn das SOx-Fangvermögen des SOx-Fangmaterials wiederhergestellt wird, die Reduktionsmittelfördereinrichtung ein Reduktionsmittel in den Maschinenabgasdurchgang fördert.

4. Abgasreinigungsgerät nach Anspruch 2, wobei, wenn das SOx-Fangvermögen des SOx-Fangmaterials wiederhergestellt wird, die Reduktionsmittelfördereinrichtung ein Reduktionsmittel in den Maschinenabgasdurchgang fördert, wenn die Temperatur des SOx-Fangmaterials in dem Prozess des Ansteigens ist.

5. Abgasreinigungsgerät nach Anspruch 2, wobei, wenn das SOx-Fangvermögen des SOx-Fangmaterials wiederhergestellt wird, die Reduktionsmittelfördereinrichtung ein Reduktionsmittel in den Maschinenabgasdurchgang von dem Zeitpunkt an, wenn die Temperatur des SOx-Fangmaterials die Temperatur erreicht, bei der eine Wärmezerlegung der Nitrate in dem SOx-Fangmaterial auftritt, bis zu dem Zeitpunkt fördert, wenn das SOx-Fangmaterial nicht länger NOx aufgrund einer Wärmezerlegung abgibt.

6. Abgasreinigungsgerät nach einem der Ansprüche 3 bis 5, wobei die Reduktionsmittelfördereinrichtung ein Reduktionsmittel zu vorbestimmten Zeitintervallen fördert, wenn das SOx-Fangvermögen des SOx-Fangmaterials wiederhergestellt wird.

7. Abgasreinigungsgerät nach einem der Ansprüche 1 bis 6, wobei die Temperatur des SOx-Fangmaterials in Stufen erhöht wird, wenn die Temperatur des SOx-Fangmaterials zum Wiederherstellen des SOx-Fangvermögens des SOx-Fangmaterials ansteigt.

## Revendications

1. Dispositif de purification d'échappement d'un moteur à combustion interne comprenant, dans un passage d'échappement de moteur, un matériau de piégeage de SOx (25) pour piéger les SOx dans les gaz d'échappement qui piège les SOx quand l'atmosphère intérieure dudit matériau de piégeage de SOx (25) est une atmosphère pauvre et la température dudit matériau de piégeage de SOx (25) est relativement faible et qui est restauré en capacité de piégeage de SOx quand l'atmosphère intérieure dudit matériau de piégeage de SOx (25) est maintenue au niveau de l'atmosphère pauvre et la température dudit matériau de piégeage de SOx (25) devient relativement élevée moyennant quoi les SOx piégés et conservés dans le matériau de piégeage de SOx diffusent à l'intérieur du matériau de conservation de SOx, lequel dispositif de purification d'échappement est pourvu d'un catalyseur de NOx (37) agencé en aval dudit matériau de piégeage de SOx piégeant et conservant les NOx quand l'atmosphère intérieure est une atmosphère pauvre et réduisant les NOx conservés pour purification quand l'atmosphère intérieure devient une atmosphère riche dans le passage d'échappement du moteur en aval dudit matériau de piégeage de SOx (25) et démarre la commande de restauration de la capacité en piégeage de NOx du catalyseur de NOx (37) avant de démarrer la commande de restauration de capacité de piégeage de SOx du matériau de piégeage de SOx (25) lorsqu'on essaye de restaurer la capacité de piégeage de SOx du matériau de piégeage de SOx (25).

2. Dispositif de purification d'échappement selon la revendication 1, dans lequel le dispositif est en outre pourvu de moyens d'alimentation en agent de réduction pour alimenter un agent de réduction dans le passage d'échappement du moteur en aval dudit matériau de piégeage de SOx et en amont dudit catalyseur de NOx et la capacité de piégeage de NOx du catalyseur de NOx est restaurée en alimentant l'agent de réduction par lesdits moyens d'alimentation d'agent de réduction dans le passage d'échappement du moteur.

3. Dispositif de purification d'échappement selon la revendication 2, dans lequel lors de la restauration de la capacité en piégeage de SOx du matériau de piégeage de SOx, lesdits moyens d'alimentation d'agent de réduction alimentent l'agent de réduction dans le passage d'échappement du moteur.

4. Dispositif de purification d'échappement selon la revendication 2, dans lequel lors de la restauration de la capacité en piégeage de SOx du matériau de piégeage de SOx, lesdits moyens d'alimentation d'agent de réduction alimentent l'agent de réduction dans le passage d'échappement du moteur quand la température dudit matériau de piégeage de SOx est en train de monter.

5. Dispositif de purification d'échappement selon la revendication 2, dans lequel lors de la restauration de la capacité en piégeage de SOx du matériau de piégeage de SOx, lesdits moyens d'alimentation d'agent de réduction alimentent l'agent de réduction dans le passage d'échappement du moteur depuis le moment où la température du matériau de piégeage de SOx atteint la température à laquelle la décomposition thermique des nitrates a lieu dans ledit matériau de piégeage de SOx jusqu'au moment où le matériau de piégeage de SOx ne décharge plus de NOx du fait de la décomposition thermique.

6. Dispositif de purification d'échappement selon l'une quelconque des revendications 3 à 5, dans lequel lesdits moyens d'alimentation d'agent de réduction alimentent l'agent de réduction à des intervalles de temps prédéterminés lors de la restauration de la capacité en piégeage de SOx du matériau de piégeage de SOx.

7. Dispositif de purification d'échappement selon l'une quelconque des revendications 1 à 6, dans lequel la température dudit matériau de piégeage de SOx est élevée par étapes lors de la montée de la température dudit matériau de piégeage de SOx pour restaurer la capacité en piégeage de SOx du matériau de piégeage de SOx.
